# EUROPEAN PATENT APPLICATION

(11) **EP 4 434 618 A1**
(43) Date of publication of application: **25.09.2024**
(21) Application number: 24712399.5
(22) Date of filing: 23.01.2024
(51) Int. Cl.: B01J 20/26, C22B 26/12, B01J 47/00

(54) **PREPARATION METHOD FOR ADSORPTION UNIT FOR LITHIUM RECOVERY AND USE THEREOF**

(30) Priority: 30.12.2022 CN 202211742198; 31.10.2023 CN 202311434130
(71) Applicant: Sunresin New Materials Co. Ltd., Xi'an, Shaanxi 710075 (CN)
(72) Inventor: LI, Suidang, Xi'an, Shaanxi 710075 (CN); WANG, Gang, Xi'an, Shaanxi 710075 (CN); LIU, Quong, Xi'an, Shaanxi 710075 (CN); KOU, Xiaokang, Xi'an, Shaanxi 710075 (CN)
(74) Representative: J A Kemp LLP
(86) International application number: PCT/CN2024/073589
(87) International publication number: WO 2024/141113

(57) **Abstract**

The invention relates to the technical field of hydrometallurgy, in particular to a method for preparing an adsorption unit for lithium recovery and use of the adsorption unit. On the basis of a patent CN102631897B, the invention innovatively proposes preparation of an adsorption unit by performing extrusion forming on pulverized lithium adsorbent resin or a lithium adsorbent precursor and an adhesive, the adsorption unit has both high selectivity and adsorption amount of the lithium adsorbent resin and can achieve high-efficiency adsorption of lithium in water with an ultra-low lithium content, and when the adsorption unit is used for adsorbing lithium in the water with the ultra-low lithium content, the entire adsorption process is simple, the desorption efficiency is high and the cost is low.

## Description

### CROSS-REFERENCE TO RELATED APPLICATION

The present application claims the priority of Chinese patent application filed to the China National Intellectual Property Administration on December 30, 2022 with application number 202211742198.1 and entitled "METHOD FOR PREPARING MATERIAL FOR LITHIUM RECOVERY FROM WATER WITH ULTRA-LOW LITHIUM CONTENT AND USE THEREOF" and Chinese patent application filed to the China National Intellectual Property Administration on October 31, 2023 with application number 202311434130.1 and entitled "METHOD FOR PREPARING ADSORPTION UNIT FOR LITHIUM RECOVERY AND USE OF ADSORPTION UNIT", and their entire contents are incorporated into the present application by reference.

### TECHNICAL FIELD

The present invention relates to the technical field of hydrometallurgy, in particular to a method for preparing an adsorption unit for lithium recovery and use of the adsorption unit.

### BACKGROUND

Lithium is an "energy metal", and lithium and its compounds are widely used in industries such as the battery industry, the ceramic industry, the glass industry, the lubricant industry, the refrigerant fluid industry, the nuclear industry, and the optoelectronic industry. With the continuous transformation of new technologies, the demand for lithium is also rapidly increasing year by year, resulting in a sharp increase in the price of lithium salts. However, the total amount of terrestrial lithium resources in nature is very limited, and it has been found that the total amount of the terrestrial lithium resources is only 13.76 million tons, which is completely insufficient to support the electrification process in major countries of the world in 2030-2040, and lithium resources will become a bottleneck of the electrification revolution. With the gradual depletion of the terrestrial lithium resources, the recovery of lithium from water with an ultra-low lithium content becomes extremely important. The water with the ultra-low lithium content (the lithium ion concentration is less than 50 ppm and even 10 ppm or below) has a wide range of sources and is high in volume, including underground raw brine, underground water, geothermal water, seawater, and the like. But because of the extremely low lithium content in such water, it cannot be effectively utilized in the industry at present. Therefore, the technological breakthrough of recovering lithium from water with low lithium content determines the industrial sustainable development prospect of lithium-related applications.

In the prior art, methods for selectively extracting lithium from a dilute solution include an ion exchange resin method, a solvent extraction method, a coprecipitation method, a selective permeable membrane method and an adsorption method. The solvent extraction method is a method for extracting lithium by organic solvents such as phosphate and fatty alcohol that have a selective extraction ability for lithium. At present, there are still many problems in the selection and recycling of extractants, and the cost of the extractants is relatively high, so there are great difficulties in large-scale extraction of lithium.

For the adsorption method, the most commonly reported method at present is to extract lithium from water with an ultra-low lithium content by using lithium manganese oxide (referred to as a lithium ion sieve HMO). The lithium ion sieve HMO has excellent lithium selectivity, high lithium adsorption amount, etc., and is one of the most popular lithium adsorbents. However, lithium manganese oxide, as a powder substance, has some problems such as difficult recovery, large loss during use, slow adsorption rate, long adsorption time, and more manganese dissolution loss during acid leaching, which seriously affect its industrial application.

Aluminum salt adsorbents have the advantages of convenient preparation, good stability, and high selectivity, and are currently recognized as promising lithium adsorbents. As an adsorbent for lithium ions, aluminum salts are developed from lithium extraction by aluminum salt precipitation, a method for preparing lithium adsorbent resin is proposed in a granted patent No. CN108421539B of Xi'an Sunresin New Materials Co., Ltd, and lithium adsorbent resin prepared by the method in this patent has been widely applied to industrial operation of lithium extraction from salt lake brine, and has shown many advantages such as high selectivity, stable adsorption amount and low cost. However, in the process of implementing the present invention, the inventors found that this lithium adsorbent resin still has the defects of low adsorption amount and low adsorption efficiency.

### SUMMARY OF THE INVENTION

In order to solve the problems of low adsorption amount, low adsorption efficiency and the like, which exist when lithium adsorbent resin prepared in the related art is used for recovering lithium from water with an ultra-low lithium content, the present invention provides a method for preparing an adsorption unit for lithium recovery and use of the adsorption unit.

Lithium is recovered from the water with the ultra-low lithium content, the existing particulate lithium adsorbent resin has the problem of less flux per unit time; however, the existing membrane absorber has only a thin layer of lithium ion sieve on the surface, so that the amount of lithium adsorption is not large enough to satisfy economic benefits of industrial operation. An adsorption unit prepared by the method of the present invention can simultaneously meet the requirements of a flux and the adsorption amount.

In a first aspect, the present invention provides a method for preparing an adsorption unit for lithium recovery, including the steps of:
mixing powder of lithium adsorbent resin with an adhesive to prepare a viscous slurry; wherein the lithium adsorbent resin is prepared by a method described in a patent CN102631897B, and the adhesive is an adhesive described in the patent CN102631897B; and
performing extrusion forming on the viscous slurry, and performing drying to obtain the adsorption unit; wherein the adsorption unit has at least one channel inside, one end of the channel is closed and the other end of the channel forms an opening at a surface of the adsorption unit.

In a second aspect, the present invention provides a method for preparing an adsorption unit for lithium recovery, including the steps of:
mixing a lithium adsorbent precursor with an adhesive to prepare a viscous slurry; wherein the lithium adsorbent precursor is a lithium adsorbent precursor or a precursor of lithium adsorbent resin described in a patent CN102631897B, and the adhesive is an adhesive described in the patent CN102631897B; and
performing extrusion forming on the viscous slurry, and performing drying to obtain the adsorption unit; wherein the adsorption unit has at least one channel inside, one end of the channel is closed and the other end of the channel forms an opening at a surface of the adsorption unit.

The adsorption unit prepared by the above method has the channels with one ends open inside, and a use method of the adsorption unit is significantly different from that of other adsorbents. During use, a pumping force is applied at the open ends of the channels, so that water with an ultra-low lithium content enters the channels of the adsorption unit through an outer wall of the adsorption unit from other closed ends, and thus lithium is adsorbed by the adsorption unit, and recovered water pumped out from the channels becomes adsorption tail liquid. The adsorption unit itself is an adsorption device, and an adsorption process of the adsorption unit no longer requires special complex equipment, and thus, the adsorption unit can be directly used for adsorption of lithium at a low concentration.

In an alternative embodiment, the powder of the lithium adsorbent resin has a particle size of 0.0001-0.08 mm.

In an alternative embodiment, the adhesive is used in an amount of 1-50% by weight of the usage amount of the powder of the lithium adsorbent resin or the lithium adsorbent precursor.

In an alternative embodiment, a shape of the adsorption unit includes at least one of a cuboid shape, a cylindrical shape, and a disk shape;
optionally, a cross-sectional shape of each channel is any one of a circular shape, a square shape, a triangular shape or other polygons; and
optionally, the number of the channels within the adsorption unit is 1-20.

In a third aspect, the present invention provides an adsorption unit for lithium recovery, and the adsorption unit is prepared by the above method.

In a fourth aspect, the present invention provides use of the above adsorption unit in recovering lithium from water with an ultra-low lithium content.

In a fifth aspect, the present invention provides a method for recovering lithium from water with an ultra-low lithium content, and the method is performed by using the above adsorption unit according to the following steps:
a. allowing the water with the ultra-low lithium content to enter the channels from a side wall of the adsorption unit and flow out from the openings of the channels until a lithium content of an effluent at the openings is equivalent to a lithium content of the water with the ultra-low lithium content; and
b. allowing an eluent to flow in from the openings of the channels and flow out from the side wall of the adsorption unit to achieve lithium elution to obtain a lithium-containing recovery solution.

In an alternative embodiment, the water with the ultra-low lithium content includes at least one of underground raw brine, underground water, geothermal water or seawater.

In an alternative embodiment, the eluent includes tap water and/or deionized water.

In an alternative embodiment, the water with the ultra-low lithium content has a lithium content of less than 50 ppm.

The technical solution of the present invention has at least the following advantages:
On the basis of a patent CN102631897B, the present invention innovatively proposes preparation of an adsorption unit by performing extrusion forming on pulverized lithium adsorbent resin or a lithium adsorbent precursor and an adhesive, the adsorption unit has both high selectivity and adsorption amount of the lithium adsorbent resin and can achieve high-efficiency adsorption of lithium in water with an ultra-low lithium content, and when the adsorption unit is used for adsorbing lithium in the water with the ultra-low lithium content, the entire adsorption process is simple, the desorption efficiency is high and the cost is low.

### BRIEF DESCRIPTION OF THE DRAWINGS:

In order to illustrate the specific embodiments of the present invention or the technical solutions in the prior art more clearly, the drawings required to be used in the description of the specific embodiments or the prior art will be briefly described below. Obviously, the drawings in the following description are some embodiments of the present invention, and those of ordinary skill in the art can obtain other drawings based on these drawings without inventive steps.
FIG. 1 schematically illustrates a schematic diagram of lithium adsorption in an embodiment of the present invention; and
FIG. 2 schematically illustrates a schematic diagram of lithium elution in an embodiment of the present invention.

### Reference signs:

1, effluent water after lithium adsorption 2, open end of channel 3, adsorption unit
4, water with ultra-low lithium content 5, channel 6, closed end of channel
7, eluent 8, open end of channel 9, adsorption unit
10, lithium-containing recovery solution 11, channel 12, closed end of channel.

### DETAILED DESCRIPTION

The following examples are provided to better further understand the present invention, are not limited to the preferred embodiments, and are not intended to limit the contents and the protection scope of the present invention, and any product that is the same or similar to the present invention obtained by anyone in light of the present invention or by combining the present invention with other features in the prior art falls within the protection scope of the present invention.

Where specific experimental steps or conditions are not specified in the examples, they can be carried out according to the operations or conditions of the conventional experimental steps described in the literature in the art. The used reagents or instruments of which manufacturers are not specified are commercially available conventional reagent products.

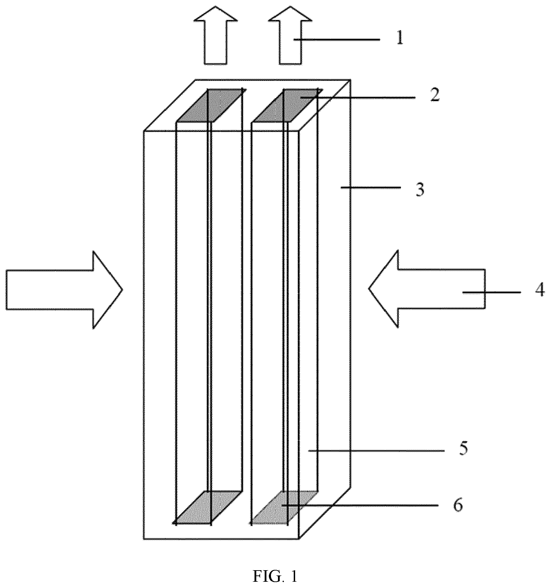

FIG. 1 schematically illustrates a schematic diagram of lithium adsorption in an embodiment of the present invention. As shown in FIG. 1, a method for adsorbing lithium by using an adsorption unit prepared according to the present invention is as follows: Lithium adsorbent resin is pulverized, and extrusion forming is performed on the pulverized lithium adsorbent resin and an adhesive to prepare an adsorption unit 3 with channels 5. Water 4 with an ultra-low lithium content enters the channels 5 of the adsorption unit 3 from a side wall of the adsorption unit 3. Lithium is trapped inside the side wall of the adsorption unit having the function of adsorbing lithium ions, and the lithium ions are trapped in the form of lithium chloride, lithium sulfate or lithium nitrate as a whole molecule. Closed ends 6 of the channels can ensure that the water with the ultra-low lithium content has sufficient contact with a functional structure in the adsorption unit 3, and adsorption saturation is achieved, and effluent water 1 after lithium adsorption flows out from open ends 2 of the channels.

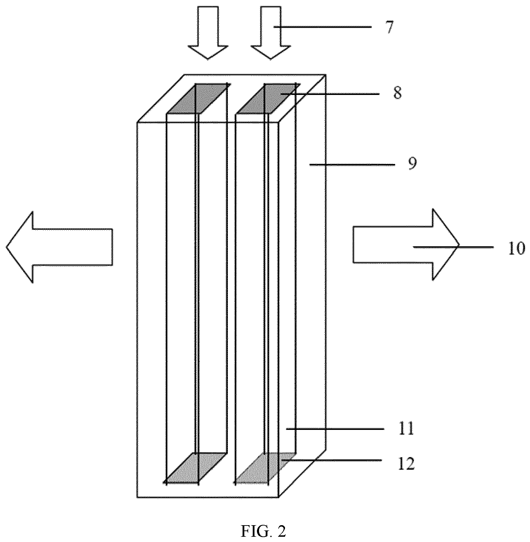

FIG. 2 schematically illustrates a schematic diagram of lithium elution in an embodiment of the present invention. As shown in FIG. 2, after the lithium ion concentration in effluent water after lithium adsorption reaches a certain degree, an eluent 7 enters channels 11 of an adsorption unit 9 from open ends 8 of the channels, and closed ends 12 of the channels can ensure sufficient contact of the eluent within the adsorption unit 9 with lithium bound to a functional structure in the adsorption unit. The eluent elutes lithium and flows out from a side wall of the adsorption unit 9 to obtain a lithium-containing recovery solution 10.

By using the adsorption unit according to the present invention and an adsorption method, a large amount of impurities contained in water can be effectively removed, and the lithium concentration in the lithium-containing recovery solution can be as high as 0.4 g/L. Meanwhile, a ratio of other impurities to lithium can be significantly reduced, and a mature process such as membrane separation can be used for concentration and lithium carbonate is prepared.

The present invention is described in further detail below with reference to specific examples which are not to be construed as limiting the claimed protection scope of the present invention.

### Example 1

An adsorption unit was prepared according to the following method:
(1) preparation of a lithium adsorbent precursor: 22.5 g of manganese hydroxide powder, 15 g of iron hydroxide powder, 7.5 g of titanium dioxide powder, and 30 g of lithium carbonate (a molar ratio of lithium to metals was 1.67: 1) were weighed, uniformly ground in a mortar, and put into a muffle furnace to be roasted at 600°C for 8 h to obtain 45 g of an ion sieve type lithium adsorbent precursor for standby application; and
(2) preparation of the adsorption unit: the lithium adsorbent precursor prepared above was taken to be mixed with an adhesive polyacrylamide (commercially available, having a molecular weight of 1.5 × 10⁶-2×10⁷) in a weight ratio of the lithium adsorbent precursor to the adhesive being 99:1 (the usage amount of the adhesive was about 1% of the usage amount of the lithium adsorbent precursor), and the mixture was heated to 40-50°C, and uniformly stirred to prepare a viscous slurry; and the viscous slurry prepared above was allowed to pass through a twin screw extruder to prepare a cuboid-shaped adsorption unit preform with a channel (having a length of 120 cm, a width of 15 cm, and a height of 80 cm, and having a channel structure, the channel having a length of 110 cm, a width of 14 cm, and a height of 80 cm, and the number of the channel being 1) by using a preform mold, and after the preform was dried by a mold dryer at 60-80°C, one end was closed by using a 316L stainless steel head to obtain an adsorption unit with the other end open.

By using the adsorption unit prepared above, lithium was recovered from underground raw brine according to the following method:
I. the adsorption unit prepared above was placed in a underground raw brine tank (with a lithium ion content of 50 ppm); raw brine was pumped into the adsorption unit from the open end of the adsorption unit by using a pump; underground raw brine entered from a side wall of the adsorption unit, and lithium in the underground raw brine was trapped in a molecular form by a functional structure in the adsorption unit; the underground raw brine with lithium adsorbed flowed out from the open end of the adsorption unit; an adsorption flow rate was 2 m³/m²/h, the adsorption time was 8 h, and the amount of lithium adsorbed by the adsorption unit was 6 mg per gram of an absorbent material according to the total amount of inlet lithium ions and outlet lithium ions;
II. the adsorption unit after lithium adsorption saturation was placed in a residual liquid recovery tank to be pressed by an air pressure from the open end of the adsorption unit, so that all underground raw brine remaining in the adsorption unit was removed by replacement, so as to avoid contaminating an eluent with the remaining underground raw brine; and
III. the adsorption unit after residual liquid was replaced was placed in an elution tank, deionized water was pumped in from the open end of the adsorption unit by using a pump, and the deionized water was in contact with an absorbent material on the side wall after passing through the channel of the adsorption unit to elute lithium adsorbed on the absorbent material, and flowed out from the side wall of the adsorption unit to achieve lithium elution so as to obtain a lithium-containing recovery solution.

The lithium ion concentration in the lithium-containing recovery solution was detected to be 400 mg/L, and the maximum lithium ion concentration was 1000 mg/L. The obtained lithium-containing recovery solution was subjected to membrane concentration and precipitation to prepare lithium carbonate with a purity of 98.5% or above.

### Example 2

An adsorption unit was prepared according to the following method:
(1) preparation of a lithium adsorbent precursor: 96 g of iron nitrate powder, 18 g of manganese dioxide powder, 6 g of aluminum hydroxide powder, and 26.4 g of lithium carbonate (a molar ratio of lithium to metals was 1.05:1) were weighed, and mixed and ground uniformly, the mixture was charged into a porcelain crucible to be placed in a muffle furnace for roasting at 550°C for 12 h, and the roasted material was naturally cooled to obtain 36 g of the lithium adsorbent precursor for standby application; and
(2) preparation of the adsorption unit: the lithium adsorbent precursor prepared above was taken to be mixed with an adhesive polyacrylamide (commercially available, having a molecular weight of 1.5×10⁶-2×10⁷) in a weight ratio of the lithium adsorbent precursor to the adhesive being 99:1 (the usage amount of the adhesive was about 1% of the usage amount of the lithium adsorbent precursor), and the mixture was heated to 40-50°C, and uniformly stirred to prepare a viscous slurry; and the viscous slurry prepared above was allowed to pass through a twin screw extruder to prepare a cuboid-shaped adsorption unit preform with a channel (having a length of 120 cm, a width of 15 cm, and a height of 80 cm, and having a channel structure, the channel having a length of 110 cm, a width of 14 cm, and a height of 80 cm, and the number of the channel being 1) by using a preform mold, and after the preform was dried by a mold dryer at 60-80°C, one end was closed by using a 316L stainless steel head to obtain an adsorption unit with the other end open.

By using the adsorption unit prepared above, lithium was recovered from underground raw brine according to the following method:
I. the adsorption unit prepared above was placed in a underground raw brine tank (with a lithium ion content of 50 ppm); raw brine was pumped into the adsorption unit from the open end of the adsorption unit by using a pump; underground raw brine entered from a side wall of the adsorption unit, and lithium in the underground raw brine was trapped in a molecular form by a functional structure in the adsorption unit; the underground raw brine with lithium adsorbed flowed out from the open end of the adsorption unit; an adsorption flow rate was 2 m³/m²/h, the adsorption time was 8 h, and the amount of lithium adsorbed by the adsorption unit was 5 mg per gram of an absorbent material according to the total amount of inlet lithium ions and outlet lithium ions;
II. the adsorption unit after lithium adsorption saturation was placed in a residual liquid recovery tank to be pressed by an air pressure from the open end of the adsorption unit, so that all underground raw brine remaining in the adsorption unit was removed by replacement, so as to avoid contaminating an eluent with the remaining underground raw brine; and
III. the adsorption unit after residual liquid was replaced was placed in an elution tank, deionized water was pumped in from the open end of the adsorption unit by using a pump, and the deionized water was in contact with an absorbent material on the side wall after passing through the channel of the adsorption unit to elute lithium adsorbed on the absorbent material, and flowed out from the side wall of the adsorption unit to achieve lithium elution so as to obtain a lithium-containing recovery solution.

The lithium ion concentration in the lithium-containing recovery solution was detected to be 350 mg/L, and the maximum lithium ion concentration was 700 mg/L. The obtained lithium-containing recovery solution was subjected to membrane concentration and precipitation to prepare lithium carbonate with a purity of 96.5% or above.

### Example 3

An adsorption unit was prepared according to the following method:
(1) lithium adsorbent resin was prepared according to a method described in Example 2 of the description of a patent CN102631897B (enlarged by 12.5 times):
   625 g of aluminum trichloride was weighed in a 5000 ml beaker, 2500 ml of water was added, 562.5 g of NaOH was added under stirring, heating was performed to 90°C, and a reaction was carried out for 3 h to obtain a suspension; 1250 g of a construction adhesive 108 (of which an ingredient is polyvinyl alcohol), 12.5 g of hydroxyethyl cellulose were then added, uniform stirring was performed, 25 g of copper nitrate was added, and uniform stirring was performed to obtain a stable dispersed phase for standby application. 6250 ml of 300# liquid paraffin was measured to be poured into a 10 L three-necked reaction kettle, 12.5 g of Tween-20 and 37.5 g of Span-65 were added, and stirring was performed to dissolve the Tween-20 and the Span-65 to form a continuous phase; the above dispersed phase liquid was poured into liquid wax, and a stirring speed was adjusted to disperse into spherical particles of 0.3-1.2 mm; then 125 g of a 6 wt% boric acid solution was added dropwise, a reaction was carried out at 35°C for 3 h, heating was performed to 110°C, and a reaction was carried out for 20 h to be finished. The temperature was reduced, and the spherical particles were filtered out, washing was performed with ethanol, and washing was performed with water to remove the ethanol to produce a resin; 1062.5 g of spherical resin was taken to be added into a 10 L three-necked reaction kettle, 5000 ml of a LiCl solution having a concentration of 20% by weight was added, a pH value was adjusted to be about 5 with hydrochloric acid having a concentration of 0.1 mol/L, a reaction was carried out at 90°C for 4 h, and then washing was performed with water to be neutral to obtain spherical lithium adsorbent resin;
(2) the spherical lithium adsorbent resin prepared above was taken, and pulverized by using a ball mill pulverizer, and powder having a particle size of 0.0001-0.0016 mm and a center particle size of 0.0005-0.0012 mm was sieved to obtain powder of the lithium adsorbent resin; the powder of the lithium adsorbent resin was taken to be mixed with an adhesive polyacrylamide (commercially available, having a molecular weight 1.5×10⁶-2×10⁷) in a weight ratio of the powder of the lithium adsorbent resin to the adhesive being 99:1 (the usage amount of the adhesive was about 1% of the usage amount of the powder of the lithium adsorbent resin), and the mixture was heated to 40-50°C, and uniformly stirred to prepare a viscous slurry; and
(3) the viscous slurry prepared above was allowed to pass through a twin screw extruder to prepare a cuboid-shaped adsorption unit preform with a channel (having a length of 120 cm, a width of 15 cm, and a height of 80 cm, and having a channel structure, the channel having a length of 110 cm, a width of 14 cm, and a height of 80 cm, and the number of the channel being 1) by using a preform mold, and after the preform was dried by a mold dryer at 60-80°C, one end was closed by using a 316L stainless steel head to obtain an adsorption unit with the other end open.

By using the adsorption unit prepared above, lithium was recovered from underground raw brine according to the following method:
I. the adsorption unit prepared above was placed in a underground raw brine tank (with a lithium ion content of 50 ppm); raw brine was pumped into the adsorption unit from the open end of the adsorption unit by using a pump; underground raw brine entered from a side wall of the adsorption unit, and lithium in the underground raw brine was trapped in a molecular form by a functional structure in the adsorption unit; the underground raw brine with lithium adsorbed flowed out from the open end of the adsorption unit; an adsorption flow rate was 2 m³/m²/h, the adsorption time was 8 h, and the amount of lithium adsorbed by the adsorption unit was 4.3 mg per gram of an absorbent material according to the total amount of inlet lithium ions and outlet lithium ions;
II. the adsorption unit after lithium adsorption saturation was placed in a residual liquid recovery tank to be pressed by an air pressure from the open end of the adsorption unit, so that all underground raw brine remaining in the adsorption unit was removed by replacement, so as to avoid contaminating an eluent with the remaining underground raw brine; and
III. the adsorption unit after residual liquid was replaced was placed in an elution tank, deionized water was pumped in from the open end of the adsorption unit by using a pump, and the deionized water was in contact with an absorbent material on the side wall after passing through the channel of the adsorption unit to elute lithium adsorbed on the absorbent material, and flowed out from the side wall of the adsorption unit to achieve lithium elution so as to obtain a lithium-containing recovery solution.

The lithium ion concentration in the lithium-containing recovery solution was detected to be 376 mg/L, and the maximum lithium ion concentration was 892 mg/L. The obtained lithium-containing recovery solution was subjected to membrane concentration and precipitation to prepare lithium carbonate with a purity of 99.2%.

### Comparative example 1

Lithium was recovered from underground raw brine by using the spherical lithium adsorbent resin prepared in the step (1) of Example 1 according to the following method:
I. the spherical lithium adsorbent prepared above was placed in a resin column made of a PP material (wherein the resin column has a specification of 20 cm in diameter and 100 cm in height, and a packing rate of 80%), and underground raw brine was pumped into the resin column packed with the spherical lithium adsorbent by using a pump; the underground raw brine entered from an upper part of the resin column, lithium in the underground raw brine was trapped in a molecular form by the spherical lithium adsorbent, and the underground raw brine with lithium adsorbed flowed out from a lower part of the resin column, with an adsorption flow rate of 0.5 BV/h; until the lithium concentration in inlet water and the lithium concentration in outlet water were close, the spherical lithium adsorbent reached a fully saturated state; the spherical lithium adsorbent has a lithium adsorption amount of 1.5 mg per gram of an adsorbent material according to the total amount of inlet lithium ions and outlet lithium ions;
II. the resin column after lithium adsorption saturation was pressed by an air pressure from an upper opening of the resin column, so that all underground raw brine remaining in the resin column was removed by replacement, so as to avoid contaminating an eluent with the remaining underground raw brine; and
III. deionized water was pumped in from the upper part of the resin column after residual liquid was replaced by using a pump, and after passing through the spherical lithium adsorbent, the deionized water eluted lithium adsorbed on the spherical lithium adsorbent, and flowed out from a lower opening of the resin column to obtain a lithium-containing recovering solution.

The lithium ion concentration in the lithium-containing recovery solution was detected to be 130 mg/L, and the maximum lithium ion concentration was 160 mg/L. The obtained lithium-containing recovery solution was subjected to membrane concentration and precipitation to prepare lithium carbonate with a purity of 98.1%.

### Example 4

An adsorption unit was prepared according to the following method:
(1) lithium adsorbent resin was prepared according to a method described in Example 5 of the description of the patent CN102631897B (enlarged by 10 times):
   500 g of Al(OH)₃ powder, 200 g of polymethyl acrylate, 400 g of styrene, 100 g of divinylbenzene, and 30 g of azobisisobutyronitrile were weighed, 800 ml of dichloroethane was measured, and stirring was performed for uniform mixing to form a dispersed phase for standby application; 5000 ml of brine having a specific gravity of 1.18, 100 g of a hydroxyethylcellulose solution having a concentration of 2% by weight, and 20 g of gelatin were added into a 10 L three-necked reaction kettle, the mixture was stirred and heated to 50°C to dissolve the mixture, and stirring and heating were stopped; the dispersed phase liquid prepared above was slowly poured into a three-necked reaction kettle, and a stirring speed was adjusted to disperse into spherical particles of 0.3-1.2 mm; heating was performed to 65°C, and heat preservation was performed for 3 h; heating was performed to 88°C, and heat preservation was performed for 10 h; cooling was performed; the spherical particles were filtered out, and the spherical particles were washed with acetone, and then washed with water to remove acetone to obtain spherical resin; 800 g of the spherical resin was taken to be added into a 10 L three-necked reaction kettle, 4000 ml of a 15 wt% lithium chloride solution was adjusted to a pH of 6 with a 5 wt% aluminum chloride solution to be added into the three-necked reaction kettle, stirring was performed, and a reaction was carried out under reflux for 2 h while controlling the temperature to be 120°C; resin was filtered out, and washed with water to be neutral to obtain spherical lithium adsorbent resin;
(2) the spheroidal lithium adsorbent resin prepared above was taken, and pulverized by using an ultrafine pulverizer, and powder having a particle size range of 0.02-0.08 mm and a center particle size of 0.03-0.04 mm was sieved to obtain powder of the lithium adsorbent resin; the powder of the lithium adsorbent resin was taken to be mixed with an adhesive polyester and polyalkenyl alcohol (commercially available, the polyester being polyethylene terephthalate, and the polyalkenyl alcohol being polyvinyl alcohol 17-92) in a weight ratio of the powder of the lithium adsorbent resin to the polyester to the polyalkenyl alcohol being 6:2:1 (the usage amount of the adhesive was 50% of the usage amount of the powder of the lithium adsorbent resin), and the mixture was heated to 45-60°C, and uniformly stirred to prepare a viscous slurry; and
(3) the viscous slurry prepared above was allowed to pass through a twin screw extruder to prepare a cylindrical adsorption unit preform with channels (having an outer diameter of 100 cm, and a height of 80 cm, each channel having a diameter of 8 cm, and having 12 cylindrical channels) by using a preform mold, and after the preform was dried by a mold dryer at 65-75°C, one end was closed by using an acrylic head to obtain an adsorption unit with the other end open.

By using the adsorption unit prepared above, lithium was recovered from seawater according to the following method:
I. the adsorption unit prepared above was placed in a seawater tank (with a lithium ion content of 0.2 ppm); seawater was pumped into the adsorption unit from the open ends of the adsorption unit by using a pump, and the seawater entered from a side wall of the adsorption unit; lithium in the seawater was trapped in a molecular form by a functional structure in the adsorption unit; the seawater with lithium adsorbed flowed out from the open ends of the adsorption unit; an adsorption flow rate was 0.2 m³/m²/h, the adsorption time was 36 h, and the amount of lithium adsorbed by the adsorption unit was 3.8 mg per gram of an absorbent material according to the total amount of inlet lithium ions and outlet lithium ions;
II. the adsorption unit after lithium adsorption saturation was placed in a residual liquid recovery tank to be pressed by an air pressure from the open ends of the adsorption unit, so that all seawater remaining in the adsorption unit was removed by replacement, so as to avoid contaminating an eluent with the remaining seawater; and
III. the adsorption unit after residual liquid was replaced was placed in an elution tank, tap water was pumped into the adsorption unit from the open ends of the adsorption unit by using a pump, and the tap water was in contact with an absorbent material on the side wall after passing through the channels of the adsorption unit to elute lithium adsorbed on the absorbent material, and flowed out from the side wall of the adsorption unit to achieve lithium elution so as to obtain a lithium-containing recovery solution.

The lithium ion concentration in the lithium-containing recovery solution was detected to be 360 mg/L, and the maximum lithium ion concentration was 750 mg/L. The obtained lithium-containing recovery solution was subjected to membrane concentration and precipitation to prepare lithium carbonate with a purity of 98.7%.

### Comparative example 2

Lithium was recovered from seawater by using the spherical lithium adsorbent resin prepared in the step (1) of Example 2 according to the following method:
I. the spherical lithium adsorbent prepared above was placed in a resin column made of a PP material (wherein the resin column has a specification of 20 cm in diameter and 100 cm in height, and a packing rate of 80%), and seawater was pumped into the resin column packed with the spherical lithium adsorbent by using a pump; the seawater entered from an upper part of the resin column, lithium in the seawater was trapped in a molecular form by the spherical lithium adsorbent, and the seawater with lithium adsorbed flowed out from a lower part of the resin column, with an adsorption flow rate of 0.5 BV/h; until the lithium concentration in inlet water and the lithium concentration in outlet water were close, the spherical lithium adsorbent reached a fully saturated state; the spherical lithium adsorbent has a lithium adsorption amount of 1.2 mg per gram of an adsorbent material according to the total amount of inlet lithium ions and outlet lithium ions;
II. the resin column after lithium adsorption saturation was pressed by an air pressure from an upper opening of the resin column, so that all seawater remaining in the resin column was removed by replacement, so as to avoid contaminating an eluent with the remaining seawater; and
III. deionized water was pumped in from the upper part of the resin column after residual liquid was replaced by using a pump, and after passing through the spherical lithium adsorbent, the deionized water eluted lithium adsorbed on the spherical lithium adsorbent, and flowed out from a lower opening of the resin column to obtain a lithium-containing recovering solution.

The lithium ion concentration in the lithium-containing recovery solution was detected to be 186 mg/L, and the maximum lithium ion concentration was 382 mg/L. The obtained lithium-containing recovery solution was subjected to membrane concentration and precipitation to prepare lithium carbonate with a purity of 97.3%.

### Example 5

An adsorption unit was prepared according to the following method:
(1) lithium adsorbent resin was prepared according to a method described in Example 8 of the description of the patent CN102631897B (enlarged by 12.5 times):
   62.5 g of Al(OH)₃ powder, 437.5 g of TiO₂ powder, and 312.5 g of lithium carbonate (a ratio of lithium to other metals was 1.35:1) were weighed, and mixed and ground uniformly, the mixture was charged into a porcelain crucible to be placed in a muffle furnace for roasting at 700°C for 3 h, and the roasted material was naturally cooled to obtain 625 g of a lithium adsorbent precursor; 500 g of an epoxy resin adhesive and 1500 g of toluene were weighed, stirring was performed to dissolve the epoxy resin adhesive well, 625 g of the above precursor was added, and uniform stirring was performed to form a dispersed phase for standby application; 7500 ml of saturated brine, 500 g of a 5 wt% carboxymethyl cellulose solution and 125 g of propylene diamine were added into a 10 L three-necked reaction kettle, and uniformly stirred to obtain a continuous phase solution; the dispersed phase was slowly added, and a stirring speed was adjusted to disperse into spherical particles of 0.3-1.2 mm; heat preservation was performed at 50°C for 18 h to cure the spherical particles, and microspheres were filtered out, washed with acetone to remove a solvent in the microspheres, and washed with water to remove the acetone to obtain spherical resin; 1000 g of the spherical resin was weighed, and loaded into a glass exchange column, a solution with a pH of 5 was prepared from a sodium hydroxide solution having a concentration of 0.1% by weight and a hydrochloric acid solution having a concentration of 0.1 mol/L, 10 L of the prepared solution was measured, and flowed through the exchange column loaded with the spherical resin at a flow rate of 8 ml/min, and then washing was performed with deionized water to be neutral to obtain lithium adsorbent resin;
(2) the spherical lithium adsorbent resin prepared above was taken, and pulverized by using a ball mill pulverizer, and powder having a particle size range of 0.001-0.035 mm and a center particle size of 0.01-0.015 mm was sieved to obtain powder of the lithium adsorbent resin; the powder of the lithium adsorbent resin was taken to be mixed with an adhesive polyacrylate (commercially available, the polyacrylate being polyethyl acrylate) in a weight ratio of the powder of the lithium adsorbent resin to the adhesive being 5:2 (the usage amount of the adhesive was about 40% of the usage amount of the powder of the lithium adsorbent resin), and the mixture was heated to 55-65°C, and uniformly stirred to prepare a viscous slurry; and
(3) the viscous slurry prepared above was allowed to pass through a twin screw extruder to prepare a disk-shaped adsorption unit with channels (having an outer diameter of 80 cm, and a thickness of 20 cm, and having 20 cylindrical channels, and each opening having a diameter of 10 cm) by using a preform mold, and after the preform was dried by a mold dryer at 60-70°C, one end was closed by using polypropylene to obtain an adsorption unit having the other end open.

By using the adsorption unit prepared above, lithium was recovered from underground water according to the following method:
I. the adsorption unit prepared above was placed in a underground water tank (with a lithium ion content of 0.13 ppm); underground water was pumped in from the open ends of the adsorption unit by using a pump, and the underground water entered from a side wall of the adsorption unit; lithium in the underground water was trapped in a molecular form by a functional structure in the adsorption unit; the underground water with lithium adsorbed flowed out from the open ends of the adsorption unit; an adsorption flow rate was 0.3 m³/m²/h, the adsorption time was 28 h, and the amount of lithium adsorbed by the adsorption unit was 8 mg per gram of an absorbent material according to the total amount of inlet lithium ions and outlet lithium ions;
II. the adsorption unit after lithium adsorption saturation was placed in a residual liquid recovery tank to be pressed by an air pressure from the open ends of the adsorption unit, so that all underground water remaining in the adsorption unit was removed by replacement, so as to avoid contaminating an eluent with the remaining underground water; and
III. the adsorption unit after residual liquid was replaced was placed in an elution tank, deionized water was pumped into the adsorption unit from the open ends of the adsorption unit by using a pump, and the deionized water was in contact with an absorbent material on the side wall after passing through the channels of the adsorption unit to elute lithium adsorbed on the absorbent material, and flowed out from the side wall of the adsorption unit to achieve lithium elution so as to obtain a lithium-containing recovery solution.

The lithium ion concentration in the lithium-containing recovery solution was detected to be 450 mg/L, and the maximum lithium ion concentration was 1028 mg/L. The obtained lithium-containing recovery solution was subjected to membrane concentration and precipitation to prepare lithium carbonate with a purity of 99.1%.

### Comparative example 3

Lithium was recovered from underground water by using the spherical lithium adsorbent resin prepared in the step (1) of Example 3 according to the following method:
I. the spherical lithium adsorbent prepared above was placed in a resin column made of a PP material (wherein the resin column has a specification of 20 cm in diameter and 100 cm in height, and a packing rate of 80%), and underground water was pumped into the resin column packed with the spherical lithium adsorbent by using a pump; the underground water entered from an upper part of the resin column, lithium in the underground water was trapped in a molecular form by the spherical lithium adsorbent, and the underground water with lithium adsorbed flowed out from a lower part of the resin column, with an adsorption flow rate of 0.5 BV/h; until the lithium concentration in inlet water and the lithium concentration in outlet water were close, the spherical lithium adsorbent reached a fully saturated state; the spherical lithium adsorbent has a lithium adsorption amount of 1 mg per gram of an adsorbent material according to the total amount of inlet lithium ions and outlet lithium ions;
II. the resin column after lithium adsorption saturation was pressed by an air pressure from an upper opening of the resin column, so that all underground water remaining in the resin column was removed by replacement, so as to avoid contaminating an eluent with the remaining underground water; and
III. deionized water was pumped in from the upper part of the resin column after residual liquid was replaced by using a pump, and after passing through the spherical lithium adsorbent, the deionized water eluted lithium adsorbed on the spherical lithium adsorbent, and flowed out from a lower opening of the resin column to obtain a lithium-containing recovering solution.

The lithium ion concentration in the lithium-containing recovery solution was detected to be 150 mg/L, and the maximum lithium ion concentration was 369 mg/L. The obtained lithium-containing recovery solution was subjected to membrane concentration and precipitation to prepare lithium carbonate with a purity of 98.7%.

### Example 6

The adsorption unit prepared in Example 2 was taken, and lithium was recovered from geothermal water according to the following method:
I. the adsorption unit was placed in a geothermal water tank (with a lithium ion content of 8 ppm); geothermal water was pumped into the adsorption unit from the open end of the adsorption unit by using a pump, and the geothermal water entered from a side wall of the adsorption unit; lithium in the geothermal water was trapped in a molecular form by a functional structure in the adsorption unit; the geothermal water with lithium adsorbed flowed out from the open end of the adsorption unit; an adsorption flow rate was 0.05 m³/m²/h, the adsorption time was 72 h, and the amount of lithium adsorbed by the adsorption unit was 7 mg per gram of an absorbent material according to the total amount of inlet lithium ions and outlet lithium ions;
II. the adsorption unit after lithium adsorption saturation was placed in a residual liquid recovery tank to be pressed by an air pressure from the open end of the adsorption unit, so that all geothermal water remaining in the adsorption unit was removed by replacement, so as to avoid contaminating an eluent with the remaining geothermal water; and
III. the adsorption unit after residual liquid was replaced was placed in an elution tank, deionized water was pumped into the adsorption unit from the open end of the adsorption unit by using a pump, and the deionized water was in contact with an absorbent material on the side wall after passing through the channel of the adsorption unit to elute lithium adsorbed on the absorbent material, and flowed out from the side wall of the adsorption unit to obtain a lithium-containing recovery solution.

The lithium ion concentration in the lithium-containing recovery solution was detected to be 395 mg/L, and the maximum lithium ion concentration was 936 mg/L. The obtained lithium-containing recovery solution was subjected to membrane concentration and precipitation to prepare lithium carbonate with a purity of 98.9%.

### Comparative example 4

Lithium was recovered from geothermal water by using the spherical lithium adsorbent resin prepared in the step (1) of Example 2 according to the following method:
I. the spherical lithium adsorbent prepared above was placed in a resin column made of a PP material (wherein the resin column has a specification of 20 cm in diameter and 100 cm in height, and a packing rate of 80%), and geothermal water was pumped into the resin column packed with the spherical lithium adsorbent by using a pump; the geothermal water entered from an upper part of the resin column, lithium in the geothermal water was trapped in a molecular form by the spherical lithium adsorbent, and the geothermal water with lithium adsorbed flowed out from a lower part of the resin column, with an adsorption flow rate of 0.5 BV/h; until the lithium concentration in inlet water and the lithium concentration in outlet water were close, the spherical lithium adsorbent reached a fully saturated state; the spherical lithium adsorbent has a lithium adsorption amount of 0.6 mg per gram of an adsorbent material according to the total amount of inlet lithium ions and outlet lithium ions;
II. the resin column after lithium adsorption saturation was pressed by an air pressure from an upper opening of the resin column, so that all geothermal water remaining in the resin column was removed by replacement, so as to avoid contaminating an eluent with the remaining geothermal water; and
III. deionized water was pumped in from the upper part of the resin column after residual liquid was replaced by using a pump, and after passing through the spherical lithium adsorbent, the deionized water eluted lithium adsorbed on the spherical lithium adsorbent, and flowed out from a lower opening of the resin column to obtain a lithium-containing recovering solution.

The lithium ion concentration in the lithium-containing recovery solution was detected to be 113 mg/L, and the maximum lithium ion concentration was 312 mg/L. The obtained lithium-containing recovery solution was subjected to membrane concentration and precipitation to prepare lithium carbonate with a purity of 97.3%.

Obviously, the above examples are instances only for clear description, rather than limiting the embodiments. Other changes or variations in different forms may be made on the basis of the above description for those of ordinary skill in the art. It is unnecessary and impossible to enumerate all the embodiments here. Obvious changes or variations derived therefrom are still within the scope of protection of the present invention.

## Claims

1. A method for preparing an adsorption unit for lithium recovery, comprising the steps of:
mixing powder of lithium adsorbent resin with an adhesive to prepare a viscous slurry; wherein the lithium adsorbent resin is prepared by a method described in a patent CN102631897B, and the adhesive is an adhesive described in the patent CN102631897B; and
performing extrusion forming on the viscous slurry, and performing drying to obtain the adsorption unit; wherein the adsorption unit has at least one channel inside, one end of the channel is closed and the other end of the channel forms an opening at a surface of the adsorption unit.

2. A method for preparing an adsorption unit for lithium recovery, comprising the steps of:
mixing a lithium adsorbent precursor with an adhesive to prepare a viscous slurry; wherein the lithium adsorbent precursor is a lithium adsorbent precursor or a precursor of lithium adsorbent resin described in a patent CN102631897B, and the adhesive is an adhesive described in the patent CN102631897B; and
performing extrusion forming on the viscous slurry, and performing drying to obtain the adsorption unit; wherein the adsorption unit has at least one channel inside, one end of the channel is closed and the other end of the channel forms an opening at a surface of the adsorption unit.

3. The method according to claim 1, wherein the powder of the lithium adsorbent resin has a particle size of 0.0001-0.08 mm.

4. The method according to claim 1 or 2, wherein the adhesive is used in an amount of 1-50% by weight of the usage amount of the powder of the lithium adsorbent resin or the lithium adsorbent precursor.

5. The method according to claim 1 or 2, wherein a shape of the adsorption unit comprises at least one of a cuboid shape, a cylindrical shape, and a disk shape;
optionally, a cross-sectional shape of each channel is any one of a circular shape, a square shape, a triangular shape or other polygons; and
optionally, the number of the channels within the adsorption unit is 1-20.

6. An adsorption unit for lithium recovery being prepared by the method according to any one of claims 1 to 5.

7. Use of the adsorption unit according to claim 6 in recovering lithium from water with an ultra-low lithium content.

8. A method for recovering lithium from water with an ultra-low lithium content, wherein the adsorption unit according to claim 6 is used and the following steps are performed:
a. allowing the water with the ultra-low lithium content to enter the channels from a side wall of the adsorption unit and flow out from the openings of the channels until a lithium content of an effluent at the openings is equivalent to a lithium content of the water with the ultra-low lithium content; and
b. allowing an eluent to flow in from the openings of the channels and flow out from the side wall of the adsorption unit to achieve lithium elution to obtain a lithium-containing recovery solution.

9. The method according to claim 8, wherein the water with the ultra-low lithium content comprises at least one of underground raw brine, underground water, geothermal water or seawater; and
optionally, the water with the ultra-low lithium content has a lithium content of less than 50 ppm.

10. The method according to claim 7, wherein the eluent comprises tap water and/or deionized water.
